# EUROPEAN PATENT APPLICATION

(11) **EP 3 832 527 A1**
(43) Date of publication of application: **09.06.2021**
(21) Application number: 19213682.8
(22) Date of filing: 04.12.2019
(51) Int. Cl.: G06K 9/00, G06K 9/32, H04B 10/116

(54) **CONTROLLING OUTPUT OF ELECTRONIC LABELS FROM CAMERA**

(71) Applicant: Pricer AB, 111 64 Stockholm (SE)
(72) Inventor: Nilsson, Björn, 111 64 Stockholm (SE); Ivanovski, Aleksander, 111 64 Stockholm (SE)
(74) Representative: AWA Sweden AB

(57) **Abstract**

A system 300 and a related method 100 for controlling an optical output of at least one electronic label in a retail environment is provided. The system comprises a camera 310 comprising a transmitter for transmitting a control signal 380, 381 and an electronic label 320 comprising a receiver 325 for receiving the control signal and wherein the electronic label is adapted to change its optical output in response to the control signal, the electronic label is arranged within the field of view of the camera. The camera is adapted to receive an identifier of the electronic label and transmit a control signal comprising the identifier and wherein the electronic label is adapted to receive the control signal comprising the identifier and change its optical output based on that the identifier comprised in the control signal matches an identifier of the electronic label.

## Description

### Field of the invention

The present disclosure generally relates to controlling an optical output of at least one electronic label and more specifically a method and system for controlling an optical output of at least one electronic label using a camera.

### Background

Products in a retail store may be arranged at respective product positions along fixtures such as shelves, racks or other displays. The product positions may for example be selected to maximize sales by promoting certain products and/or to improve logistics of the store. Product positions for at least some products may be changed quite often and it may be difficult to maintain an updated labelling of the actual products positioned on the shelves. Shelf talkers may be applied in order to temporarily promote certain products or used in order to provide supplementary product information.

Hence, the information presented by the labels may become irrelevant and/or outdated. For example, products may be rearranged in the retail environment, there may be a change in price (such as temporarily due to for example time limited offers or the price may be changed due to other long-term factors), and/or other information may need to be changed affecting the need for updating the labelling of the products.

A retail store may contain a plurality of products and labels which may significantly affect the time for updating pricing and/or other product information presented on the labels negatively.

Updating the labelling may be done manually, where a list of product information may be used to update information presented for a certain product in or on a specific shelf. This is normally time consuming and often requires interaction with one label at the time. An automated update of electronic labels may save time but may be inaccurate and may be power consuming.

The above described updating methods may therefore be prone to suffer of human errors and/or be relatively process- and/or resource demanding when applied in a retail store. Hence, new methods and systems for updating the labeling are desirable.

### Summary

It would be advantageous to achieve a method and/or system for updating the shelf labeling of products overcoming, or at least alleviating, the above mentioned drawbacks. In particular, it would be desirable to achieve a method for controlling an optical output of at least one electronic label in a retail environment.

To better address one or more of these concerns, a method having the features defined in the independent claim is provided. Preferable embodiments are defined in the dependent claims.

Hence, according to an aspect, a method for controlling an optical output of at least one electronic label in a retail environment is provided. The electronic label may comprise a receiver for receiving a control signal and may be adapted to change its optical output in response to the control signal, the electronic label may be arranged within the field of view of a camera comprising a transmitter for transmitting a control signal. The method may comprise receiving, by the camera, an identifier of the electronic label, and transmitting, by the camera, a control signal comprising the identifier. The method may further comprise receiving, by the electronic label, the control signal comprising the identifier, and changing the optical output of the electronic label based on that the identifier comprised in the control signal matches an identifier of the electronic label.

By an optical output it may be meant that the electronic label may comprise at least one of a display device, a light emitting device, and any other device suitable for presenting information, generating light and/or generating a visual output. Hence, the electronic label may display information and/or have light emitted by a light source. The light source may be for example a light emitting device, LED, a display device and/or any other device suitable to produce a visual output. The display device may comprise electronic paper, e-paper, electronic ink., e-ink, LCD, Oled, LCD TFT, electrophoretic or any other display device capable of changing its output electronically.

By controlling an optical output it may be meant that a visual output is changed, such as a change in output of light intensity from the electronic label, change in color output from the electronic label and/or change in displayed information on the electronic label.

A retail environment may for example be any environment wherein products or goods, services or similar are offered for selling or rental.

By control signal it may be meant a signal to instruct or control the receiving device. The control signal may be a wireless and/or wired signal comprising information on how and/or when to act when receiving the control signal. The control signal may comprise a start and/or stop command. The control signal may comprise information on how to respond to the control signal. In other words, the control signal may contain information on how to act in response to the control signal.

By how to act it may be meant that a command on how to change the optical output of the electronic label may be provided by the control signal. As a non-limiting example, the control signal may comprise an updated information associated with a product type that may in turn be associated with the electronic label such as price information for the product type and/or any information associated with the product type. As another non-limiting example, the control signal may also comprise a change in color of the optical output of the electronic label. By a product type it may be meant a stock keeping unit, SKU.

By when to act, it may be meant that the control signal may comprise information on at least one of when to present information associated with a product type and when to change the optical output of the electronic label, wherein the change in optical output of the electronic label may be a predetermined change in optical output and/or a change in optical output defined by the control signal.

By receiving, by the camera, an identifier of the electronic label, it may be meant that the camera receives the identifier of the electronic label at from least one of the electronic label and a database comprising identifiers of electronic labels associated with the camera.

An electronic label having an optical output means a label powered by an electrical current with the possibility of altering its output or appearance, the output may be a display, light emitting diode (LED) or any other visual device. The display may contain information associated with a related service or product. An associated product type and/or product unit of said product type may be located relatively close to the electronic label in order for electronic label to be relatable to the product type.

By information associated with a product type it may be meant that the information is relevant for the product type. In other words, the information associated with a product type may comprise data associated with the product units of the product type, wherein data may comprise at least one of the product type, a reference, a name, a price information and any other information relevant to the product type.

By the electronic label may be arranged within the field of view of a camera it may be meant that the electronic label may be comprised in the field of view of the camera. The electronic label within the field of view of the camera may be associated with the camera.

An identifier of the electronic label may be a hash code, and/or anything that may be used in order to identify the electronic label. The identifier may be significant for the electronic label. The identifier may be unique for each electronic label.

By changing the optical output of the electronic label it may be meant a change in optical output of the electronic label. By a changing the optical output of the electronic label it may be meant that the optical output of the electronic label may be changed such that a display device changes displayed information and/or a light emitting device changes its emitted light. In other words, this may comprise a change in output of light intensity from the electronic label, change in color output from the electronic label and/or change in displayed information on the electronic label. Hence, by a change in optical output it may be meant that the optical output of the electronic label may be changed such that a display device changes displayed information and/or a light emitting device changes its emitted light.

By changing the optical output of the electronic label based on that the identifier comprised in the control signal matches an identifier of the electronic label it is meant that a comparison is done of the identifier comprised in the control signal to the identifier of the electronic label. If the comparison shows a matching identifier of the electronic label to the one comprised in the control signal the method may change the optical output of the electronic label. In other words, changing the optical output of the electronic label may be performed when the identifier comprised in the control signal matches an identifier of the electronic label. There may be a plurality of electronic labels comprising unique identifiers, hence each electronic label may be identified and have its optical output changed individually upon request. Wherein the change of optical output may be significant for each electronic label.

Generally, this may provide in a facilitated change in the optical output of the electronic label. This may also provide for initiating fewer electronic labels to change their respective optical output compared to transmitting a control signal targeting all electronic labels in a retail area. Consequently, this may provide in decreased power consumption since fewer electronic labels may be triggered to change their respective optical output. In other words, this may provide in less power consumption since the transmitted control signal may be limited to reach electronic labels arranged within a predetermined range and/or direction. Hence, the electronic labels arranged outside the predetermined range and/or direction may not receive the control signal and avoiding comparison of the identifier in the control signal to the identifier of the electronic label, which in turn may provide for less power consumption.

By changing the optical output of the electronic label based on that the identifier comprised in the control signal matches an identifier of the electronic label may provide in facilitated identification of the electronic label. This may provide in facilitated update procedure of product information presented on the electronic label, wherein the product information may for example be pricing, content etc. for a product type. I.e. the electronic label may comprise information associated with a product. This may also facilitate marketing of a product type associated by the electronic label by changing the optical output of the electronic label drawing attention from a potential customer.

By receiving, by the camera, an identifier of the electronic label may provide in facilitated identification of the electronic label.

By transmitting, by the camera, a control signal comprising the identifier may facilitate communication to an electronic label or a group of electronic labels in an area. This may provide in triggering electronic labels arranged in the predetermined range and/or direction from the camera. This may provide facilitated communication to an electronic label arranged in the vicinity of and/or close to the camera. By an electronic label arranged in the vicinity of the camera it may be meant that the electronic label is arranged at a predetermined range and/or direction from the camera in order for a signal transmitted from the camera to reach the electronic label. This predetermined range and/or direction may be an area in the field of view of the camera. However, this may not be limited to the field of view of the camera, i.e. the predetermined range and/or direction may comprise an area outside the field of view of the camera. This may facilitate in transmitting the control signal to a predetermined electronic label associated with the camera.

By receiving, by the electronic label, the control signal comprising the identifier this facilitates updating the electronic label. By updating the electronic label, it may be meant updating pricing and/information related to an associated product type. This may also facilitate changing the optical output such that the product type associated with an electronic label draws attention from surrounding potential customers in a retail area, which in turn may facilitate marketing of the product type associated with the electronic label.

According to an embodiment, the step of receiving, by the camera, an identifier of the electronic label may comprise at least one of determining an identifier of the electronic label using the camera and receiving, by the camera, the identifier from a server.

By using the camera, it is meant that the camera is used to receive the identifier. This may be done by capturing at least one image using the camera. The at least one image may be analyzed to determine the identifier of the electronic label from the image. I.e. the optical output may be analyzed in the at least one image. By the optical output may be analyzing in the at least one image it may be meant that the at least one image may be analyzed for changes in optical output from the electronic label and/or the optical output from the at least one electronic label may be analyzed by comparison to a predetermined optical output. The identifier may be determined by a characteristic change in optical output from the electronic label, wherein the characteristic change in optical output is associated with the identifier of the electronic label and hence the change in optical output may be significant for a specific electronic label. In other words, the image may be analyzed for detecting the change or changes in optical output in order to detect the identifier of each of the at least one electronic label.

The server may be a local server and/or a cloud server. In other words, the server may be a physical server and/or a virtual server. The server may comprise a database.

By determining an identifier of the electronic label using the camera a facilitated communication to an unknown electronic label arranged in the vicinity of and/or close to the camera may be provided. By the electronic label being arranged in the vicinity of and/or close to the camera it may be meant that the electronic label is arranged in the field of view of the camera. This may also facilitate determining the position of product units of a product type associated with the electronic label, since product units of a product type associated with the electronic label may be arranged at a predetermined position relative the electronic label. Product units may be of a certain product type.

By receiving, by the camera, the identifier from a server this may provide in facilitated transmission of the identifier of the electronic label to the camera. This may facilitate control of the camera with associated electronic labels. By a camera with associated electronic labels it may be meant that the electronic labels may be arranged in the field of view of the camera. In other words, electronic labels associated with a camera may be comprised within the field of view of that camera. The server may comprise information of the electronic label arranged in the field of view of the camera. There may be a plurality of electronic labels and at least one camera. Hence, the server may further facilitate coordination of the at least one camera and the change in optical output and/or update of the plurality of electronic labels within the retail environment. In other words, this may further facilitate updating the electronic label coordinating the at least one camera.

According to an embodiment, the control signal may be transmitted to electronic labels arranged in the field of view of the camera.

The control signal may be transmitted to electronic labels arranged in the field of view of the camera directly and/or indirectly. By indirectly it is meant that the signal may be transmitted from the camera to the electronic label via at least one of a server, a control unit and any other unit suitable to relay a transmitted signal. By directly it is meant that the control signal may be transmitted from the camera to the electronic label. The control signal may be transmitted from the camera to the electronic label without any intermediary steps, such as transmitting the control signal via a server, a control unit and/or any other unit suitable to relay the transmitted signal.

According to an embodiment, the control signal may be transmitted in a direction, and wherein the control signal may be transmitted using at least one of a Wireless, Wifi, signal, an Infrared, IR, signal, a Bluetooth Low Energy, BLE, signal, a Near-Field communication, NFC, signal, a Radio Frequency, RF, signal, an optical signal and a sound signal.

The control signal may be directed in a certain direction.
By BLE signal it is meant a Bluetooth Low Energy signal. By NFC signal it is meant a near-field communication signal. By RF signal is a radio frequency signal. By optical signal it is meant a signal of optical character, i.e. an electromagnetic signal in either the UV-, the visible- or the IR spectra. The control signal may be transmitted by beamforming technology. In other words, the control signal may be a directed signal in a certain direction. The signal may also be directed optically. As a non-limiting example, the transmitted control signal may be directed by reflection and/or focusing of the transmitted control signal.

By the control signal may be transmitted in a direction, a limitation in electronic labels reached by the control signal may be provided. Hence, this may provide in the possibility to target a number of electronic labels being part of a system comprising a plurality of electronic labels wherein at least part of the electronic labels may be arranged out of range of the control signal.

According to an embodiment, the method may further comprise: verifying the change in optical output using the camera.

By verifying the change in optical output using the camera it may be meant that the camera may capture at least one image and by analyzing the at least one image the optical output may be verified by comparing the optical output to a predetermined optical output. The optical output may comprise a change in optical output, a text, a hash code, an QR code and/or an image and hence verifying the change in optical output may comprise analyzing the change in optical output, text, the hash code, the QR code and/or the image of the electronic label in the captured image. As a non-limiting example, the electronic label may change its optical output in a predetermined way verifying that the optical output of the electronic label is changed based on the received control signal. The optical output may comprise a change of light intensity and/or color and the verifying the change in optical output may comprise analyzing the change of light intensity and/or color of the optical output of the electronic label in the captured image. The change in light intensity and/or color may comprise a distinct temporal pattern of optical changes. In other words, the change of light intensity and/or color of the electronic label may comprise a characteristic change of optical output significant for a specific electronic label.

By verifying the change in optical output using the camera may provide in facilitated verification of the optical output of the electronic label. This, since there may be an automated process of ensuring the change in optical output. This may facilitate identifying faulty electronic labels being unresponsive of the control signal transmitted. The verification of optical output may also be facilitated since information from several electronic labels may be acquired simultaneously from at least one image which may save time, power and/or processing resources needed.

According to an embodiment, the identifier may comprise a predetermined unique identifier.

By a unique identifier it is meant an identifier for the electronic label being unique, in order to identify the electronic label. The unique identifier may comprise at least one of a hash code, a numeric code, a hexadecimal code, a binary code. In other words, the unique identifier may comprise an identifying string of text, numbers, hexadecimal code, binary code or the like. The unique identifier may be may be assigned to the electronic label during for example manufacturing.

A predetermined unique identifier may facilitate globally and/or locally identifying a device comprising the predetermined unique identifier.

According to an embodiment, the identifier may comprise a shortened unique identifier.

A shortened unique identifier it may be meant an identifier of the electronic label having an identifier with less possible distinguishing variations. A shortened unique identifier, or a local identifier, may comprise less characters in order to have one specific electronic label distinguished from another compared to when distinguish an electronic label from another globally. In other word, a first number of electronic labels may form a set of electronic labels and a second number of electronic labels may form a subset of electronic labels. The subset of electronic labels may be at least part of the set of electronic labels. The set of electronic labels may comprise a global identifier and they may be distinguishable by the global identifier and the subset of electronic labels may comprise a local identifier and they may be distinguishable by the local identifier. The local identifier may comprise less characters than the global identifier, i.e. a shorter hash-code or the like.

The electronic labels may comprise a globally unique identifier that's assigned to the electronic labels during manufacturing and a subset of this global unique identifier may be used as the local identifier.

Using a shortened identifier, i.e. a local identifier, may provide in a facilitated computer processing since fewer parameters has to be compared in order to identify a device.

According to an embodiment the control signal may further comprise information associated with a change in optical output of the electronic label and wherein the change in optical output by the electronic label may be based on the information.

By the control signal may further comprise information associated with a change in optical output it is meant that the control signal may further comprise instructions on how to act upon reception of the control signal and/or instructions to initiate one or more predetermined actions upon reception of said control signal. In other words, the control signal may comprise instructions for how, when and/or if the electronic label should change its optical output.

This may facilitate timing of the change in optical output with the capturing of images with the camera. This may also facilitate identifying the electronic labels within the field of view, since the optical output may be adapted to the number of electronic labels arranged within the field of view of the camera in order for each one to be identified.

Additionally, this may also facilitate updating the electronic labels with a predetermined information.

According to an embodiment, the information may comprise at least one of a product name, a price information, information for staff, information to alert staff, inventory information, information to alternate light output, information to change color, information to display an image.

This may provide facilitated update procedure of the information presented on the electronic label. By the information comprising information for staff, restocking the shelves with products, i.e. product units, may be facilitated by, for example, indicating for the staff of shelves in need of restocking. Similarity, the staff may be alerted when unwanted events occurs such for example when a product, i.e. a product unit has been misplaced, i.e. when a product unit of one product type is placed among product units of another product type. The information comprising information for staff may also provide facilitated surveillance of power status since the staff may be alerted of low battery level. The electronic label may change its optical output in a predetermined way in order to indicate a low power. This may also provide facilitated marketing of product types, by a changing optical output drawing attention from possible customers.

According to an embodiment, the control signal may further comprise information associated with a request of data transfer from the electronic label to the camera.

By a request of data transfer it is be meant that the camera may request or ask for data from the electronic label. The data may be associated with the electronic label. The data may comprise at least one of battery level, information currently presented by the electronic label, general status of the electronic label and an identifier of the electronic label. Wherein the general status of the electronic label may in turn comprise possible errors in circuitry, errors in power supply and/or other errors significant for the performance of the electronic label. The electronic label may comprise a sensor. The sensor may comprise at least one of a temperature sensor, a motion sensor and accelerometer sensor. The electronic label may comprise a storage device. Hence, the data may comprise at least one of detected temperature, detected motion, detected acceleration of the electronic label, historical temperature data, historical detected motion data and historical detected acceleration of the electronic label.

By information associated with a request of data transfer, it may be meant information comprising a command for request of data transfer from a source such as the recipient. As a non-limiting example, the camera may transmit a control signal comprising information associated with a request of data transfer from the electronic label to the camera, upon reception of the control signal by the electronic label, the electronic label may, based on the control signal, transmit data according to the control signal.

By the control signal may comprise information associated with a request of data transfer from the electronic label to the camera may provide a facilitated surveillance of the electronic label, such as its battery state of charge, the ambient temperature and/or other sensory data that may be detected by the electronic label by requesting the data from the electronic label, wherein the data may comprise information associated with the electronic label. In other words, a facilitated surveillance of the electronic label may be provided, since the camera may transmit a control signal comprising a request of data transfer from the electronic label to the camera such that the electronic label may transmit data associated with the electronic label as a response to receiving the request. As a non-limiting example this may facilitate battery change and avoid electronic labels to shut down due to low power, since the camera may transmit a control signal comprising a request of data transfer from the electronic label to the camera such that the electronic label may transmit data comprising the battery state of charge of the electronic label. This may also provide in facilitated surveillance of products and/or product units of certain products or product types wherein ambient temperature may be critical, such as for example perishables. I.e. this may for example facilitate alerting staff if the ambient temperature by the products are not kept at a predetermined level.

This may also facilitate verifying the change in optical output, by requesting data from the electronic label on the current optical output of the electronic label.

According to an embodiment the method may further comprise receiving, by the camera, a triggering signal and triggering the camera to start determining an identifier of the electronic label based on the triggering signal.

By receiving, by the camera, a triggering signal and triggering the camera to start determining an identifier of the electronic label based on the triggering signal may facilitate timing of when to start identifying the electronic labels. This may further facilitate to coordinate initiation of electronic labels. Further, this may provide the method to facilitate not transmitting a control signal from several cameras simultaneously and avoiding possible interference between the different cameras and/or electronic labels.

According to an embodiment the method may further comprise triggering the camera to start transmitting the control signal, wherein the triggering signal may be generated by at least one of a motion detected by the camera, an object passing the camera is being detected, a button pressed on the camera, a Wireless, Wifi, signal, an Infrared, IR, signal, a Bluetooth Low Energy, BLE, signal, a Near-Field communication, NFC, signal, a Radio Frequency, RF, signal, an optical signal, a sound signal, vibration and a scheduled triggering.

By passing the camera it is meant that an object is passing within the field of view of the camera.

This may further facilitate that the electronic label may change its optical output when an object passing the camera is being detected by the camera. An object moving within the field of view of the camera may be likely to be close to the electronic label and if the object is a customer or staff they may observe the change in optical output of the electronic label. Hence, this may facilitate saving power since the control signal may be limited to be transmitted when an object passing the camera is detected by the camera. In other words, the electronic label may change its optical output when motion is detected, for example, drawing attention when an object such as customer or staff pass by.

This may also facilitate detection of theft of the electronic label by alerting when vibration is detected over a certain vibration threshold that may be significant of sudden movement of the electronic label.

This may also facilitate updating the electronic labels in the field of view by pressing a button on the camera. By sending a signal, according to the above, the camera may be coordinated together with other cameras to update their respective associated electronic labels and this may facilitate facilitated coordination of updating the electronic labels since this may provide that possible interference between the different cameras and/or electronic labels may be avoided.

According to an embodiment, the determining an identifier of the electronic label comprises transmitting a control signal from the camera to the electronic label and controlling the electronic label to change its optical output based on the control signal. The method may further comprise capturing a plurality of images containing the electronic label and determining an identifier of the electronic label by analyzing the optical changes in the images.

I.e. the electronic label may receive the control signal after it being transmitted from the camera.

By analyzing the optical changes in the images, it may be meant that the images may be analyzed for changes in optical output from the electronic label. In other words, the images may be analyzed for detecting the change or changes in optical output in order to detect the identifier of each of the at least one electronic label.

Generally, this provides a facilitated control and identification of the electronic label arranged in the field of view of the camera. Which in turn, may provide for initiating fewer electronic labels to change their respective optical output when identifying them compared to transmitting a control signal targeting all electronic labels in a retail area. Consequently, this may provide in decreased power consumption when identifying the electronic labels since fewer electronic labels may be triggered to change their respective optical output.

By transmitting a control signal from the camera to the electronic label and controlling the electronic label to change its optical output based on the control signal, a facilitated triggering of the electronic label to change its optical output is provided since the camera is used to trigger the electronic labels. Hence, controlling a specific group of electronic labels may be facilitated since the camera may have associated electronic labels. The associated electronic labels may be arranged in the field of view of the camera. By capturing a plurality of images containing the electronic label and determining an identifier of the electronic label by analyzing the optical changes in the images, a facilitated identification of the electronic label arranged in the field of view of the camera may be provided since the camera may be used in order to determine the identification of the electronic label. This may also provide in facilitated transmission of the identifier from the electronic label to the camera, since the camera may capture at least one image and determine the identifier of more than one electronic label simultaneously based on the captured at least one image.

A second aspect of the inventive concept is provided, by a system (300) for controlling an optical output of at least one electronic label in a retail environment, wherein the system may comprise a camera comprising a transmitter for transmitting a control signal and an electronic label that may comprise a receiver for receiving the control signal and wherein the electronic label may be adapted to change its optical output in response to the control signal, the electronic label may be arranged within the field of view of the camera. The camera may be adapted to receive an identifier of the electronic label and may transmit a control signal comprising the identifier and wherein the electronic label may be adapted to receive the control signal comprising the identifier and change its optical output based on that the identifier comprised in the control signal matches an identifier of the electronic label.

By receiver it may be meant a receiver for at least one of a Wireless, Wifi, signal, an Infrared, IR, signal, a Bluetooth Low Energy, BLE, signal, a Near-Field communication, NFC, signal, a Radio Frequency, RF, signal, an optical signal and a sound signal. By receiver it may be meant a receiver for a wireless signal. Hence, the wireless signal may comprise at least one of a Wireless, Wifi, signal, an Infrared, IR, signal, a Bluetooth Low Energy, BLE, signal, a Near-Field communication, NFC, signal, a Radio Frequency, RF, signal, an optical signal and a sound signal.

The camera may provide for facilitated communication with the electronic label since the electronic label and the camera may be arranged such that the electronic label is positioned in field of view of the camera, hence the electronic label may be arranged within a predetermined range from the camera. The camera may facilitate the transmitting of control signal to the electronic label since the electronic label may be arranged at a predetermined range from the camera. Additionally, the camera may be associated with electronic labels arranged within the field of view of the camera further facilitating the communication. The camera may also facilitate verifying the output of the electronic label by capturing images of the electronic labels controlling the output of the electronic labels.

By the electronic label being arranged in the field of view of the camera may provide for facilitated identification of the electronic label by capturing images using the camera. By the electronic label comprising a receiver may facilitate communication with the electronic label.

It is noted that embodiments of the invention relate to all possible combinations of features recited in the claims. Further, it will be appreciated that the various embodiments described for the method are all combinable with the device as defined in accordance with the second aspect of the present invention.

### Brief description of the drawings

This and other aspects will now be described in more detail in the following illustrative and non-limiting detailed description of embodiments, with reference to the appended drawings.
Figures 1a - 1b schematically illustrates a perspective view of the system according to an embodiment.
Figure 2 schematically illustrates a perspective view of the system according to an embodiment.
Figure 3 schematically illustrates a perspective view of the system according to an embodiment.
Figures 4a - 4b schematically illustrates a flow chart of the method according to an embodiment.

All the figures are schematic, not necessarily to scale, and generally only show parts which are necessary in order to elucidate the embodiments, wherein other parts may be omitted. Like reference numerals refer to like elements throughout the description.

### Detailed description

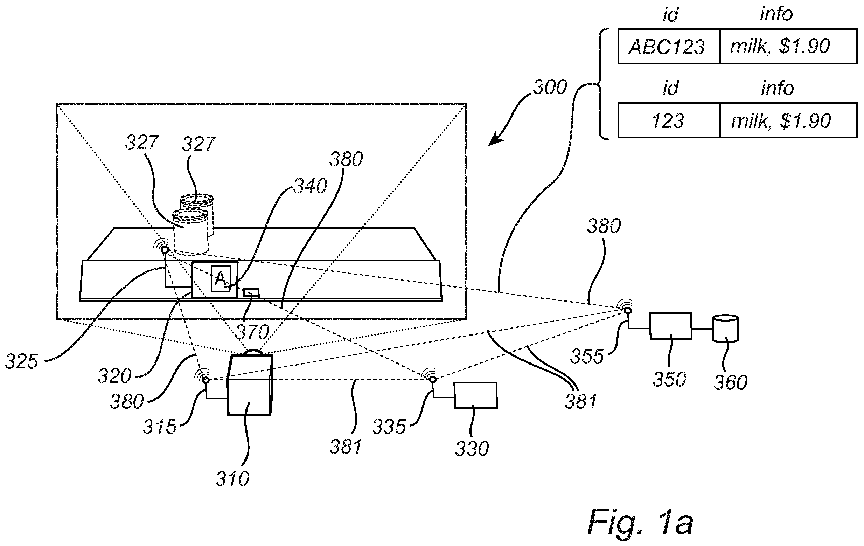

A system (300) for controlling an optical output of at least one electronic label in a retail environment according to an embodiment will be described with reference to Figure 1a - 1b.

Figures 1a - 1b illustrates the system 300. The system 300 may comprise an electronic label 320. The electronic label 320 may be associated with a product type of one or more product units 327. The electronic label 320 may comprise an identifier. The identifier may be unique for the electronic label 320. In other words, the identifier may comprise a predetermined unique identifier. The identifier may comprise a shortened unique identifier.

The unique identifier may be assigned to the electronic label 320 during for example manufacturing. The unique identifier may be a predetermined unique identifier. The unique identifier may be unique globally, i.e. the unique identifier may be a global identifier. In other words, the identifier may be used to identify the electronic label 320 globally. The unique identifier may comprise at least one of a hash code, a numeric code, a hexadecimal code, a binary code. In other words, the unique identifier may comprise an identifying string of text, numbers, hexadecimal code, binary code or the like.

By a shortened unique identifier it may be meant an identifier of the electronic label 320 having an identifier with less possible distinguishing variations compared to that of the unique identifier. A shortened unique identifier, or a local identifier, may comprise less characters in order to have one specific electronic label distinguished from another compared to when distinguish an electronic label from another globally.

For example, a first number of electronic labels may form a set of electronic labels and a second number of electronic labels may form a subset of electronic labels. The subset of electronic labels may be at least part of the set of electronic labels. Each electronic label in the set of electronic labels may be distinguishable by the global identifier and each electronic label in the subset of electronic labels may be distinguishable by the local identifier. The local identifier may comprise less characters than the global identifier, i.e. a shorter hash-code or the like.

This is illustrated in Figure 1a as a signal comprising the global identifier, for example, ABC123 that may be transmitted together with for example information associated with a product type and/or a signal comprising the local identifier of, for example, 123 that may be transmitted together with the information associated with a product type. Where in the information associated with a product type may comprise at least one of a product name, a price information, information for staff, information to alert staff, inventory information, information to alternate light output, information to change color, information to display an image.

The system 300 may comprise a camera 310. The camera 310 may be configured to receive the identifier of the electronic label 320. The camera 310 may be configured to receive the identifier from at least one of a server 350, a control unit 330 and the electronic label 320. The camera 310 may be configured to determine the identifier of the electronic label 320.

The camera 310 may be arranged to capture at least one image of the electronic label 320. The camera may be configured to transmit the control signal 380, 381. The control signal 380,381 may comprise an identifier of the electronic label 320. The signal comprising the global identifier, and/or the local identifier may be at least part of the control signal 380, 381. In other words, the control signal 380, 381 may comprise at least one of the global identifier and the local identifier. The camera 310 may comprise a transceiver 315 for transmitting and/or receiving communication such as a command or the control signal 380, 381. The camera 310 may also comprise separate means for receiving and transmitting a signal. The transceiver 315 may be arranged to transmit and/or receive at least one of a radio signal, a wireless, Wifi, signal, an Infrared, IR, signal, a Bluetooth, BT, signal, a Bluetooth Low Energy, BLE, signal, a Near-Field communication, NFC, signal, a Radio Frequency, RF, signal, a Radio Frequency identification, RFID, signal, an optical signal, a sound signal or any signal suitable for communication.

The electronic label 320 may be arranged in the field of view of the camera 310. The electronic label 320 may be adapted to receive the control signal 380 and may be adapted to change its optical output in response to said control signal 380.

The electronic label 320 may be configured to change its optical output based on that the identifier comprised in the control signal matches an identifier of the electronic label 320. In other words, the electronic label 320 may be arranged to compare the identifier comprised in the control signal to the identifier of the electronic label 320. If the comparison shows a matching identifier of the electronic label 320 to the one comprised in the control signal the electronic label 320 may be configured to change the optical output of the electronic label 320.

The control signal 380,381 may comprise information on how to respond to the control signal 380,381. In other words, the control signal 380,381 may contain information on how to act in response to the control signal. By how to act it may be meant that a command on how to respond to the control signal may be provided by the control signal itself. The optical output of the electronic label 320 may be changed according to a command provided by the control signal 380,381. The electronic label 320 may emit a sound signal based on the control signal. The control signal 380,381 may comprise an updated information associated with a product type that may in turn be associated with the electronic label 320 such as price information for a product type and/or any information associated with the product type. The control signal 380,381 may also comprise a command to change color of the optical output of the electronic label 320 or other changes in optical output, such as for example a change in optical output indicating a product type is on sale or a change in optical output in order to draw attention to the electronic label 380,381.

The control signal 380,381 may comprise information on when to change the optical output of the electronic label 320, wherein the optical output may comprise information associated with the product type. The electronic label 320 may be configured to act in response to the received control signal 380, 381 by performing a predetermined action. Wherein the predetermined action may comprise at least one of flashing light in a predetermined pattern, change in color of the optical output into a predetermined color, emitting a sound signal and vibrate.

There may be a plurality of electronic labels 320 present. Hence, at least one electronic label 320 may be present. The at least one electronic label 320 may comprise an optical output device 340. The optical output device 340 may comprise at least one of a LED, a display and any other visual device.

As discussed above, the camera 310 may determine the identifier of the electronic label 320 wherein the identifier may be associated with an identity of the electronic label 320. Hence, the camera 310 may capture at least one image comprising the electronic label 320. The electronic label 320 may be configured to change its optical output in order for the camera 310 to determine the identifier of the electronic label 320 within the captured at least one image. In other words, the camera 310 may be configured to capture at least one image of the electronic label. The electronic label 320 may be configured to change its optical output. The change in optical output may for example be displaying a visual reference. The change in optical output may comprise a distinct temporal pattern of optical changes for each label. By detection of at least one of the change in optical output, the visual reference and the distinct temporal pattern of optical changes, the electronic label may be identified.

By a visual reference it may be meant that the display of the electronic label changes output into displaying information such as at least one of a QR code, a number, a message, a picture and the like that the camera may be able to detect.

By a distinct temporal pattern of optical changes, it may be meant that the optical changes are changing in a distinct way characteristic for a certain electronic label. Thus, the electronic label may be identified using the distinct temporal pattern of optical changes.

The camera may be configured to receive any one of a control signal and a triggering signal. The control signal received by the camera may comprise the triggering signal. The camera may be configured to start determining an identifier of the electronic label based on at least one of the control signal 380,381 and the triggering signal.

The triggering signal may be generated by at least one of a motion detected by the camera, a button pressed on the camera, a Wireless, Wifi, signal, an Infrared, IR, signal, a Bluetooth Low Energy, BLE, signal, a Near-Field communication, NFC, signal, a Radio Frequency, RF, signal, an optical signal, a sound signal, vibration and a scheduled triggering.

The at least one electronic label 320 may be configured to present information associated with a product type, wherein output device 340 may comprise additional information associated with a product type, wherein the output device and the electronic label may comprise information associated with the same product type. Over time, pricing and/or other information relating to the product type may change and/or product types and/or product units may change place, this may result in incorrect information presented on the electronic label 320. Hence, the system 300 may need the information presented on the electronic label 320 to be updated.

The camera 310 may be configured to receive a triggering signal and wherein the camera 310 may be configured to start transmitting the control signal 380, 381 as a response to the triggering signal. In other words, there may be a triggering of the camera 310 to start transmitting the control signal. In other words, the camera 310 may be triggered to start transmitting the control signal. The electronic label 320 may be arranged to receive the control signal. The electronic label 320 may be arranged to change its optical output based on the received control signal 380, 381.

The triggering signal, i.e. the triggering may be generated by at least one of a motion detected by the camera, a button pressed on the camera, a Wireless, Wifi, signal, an Infrared, IR, signal, a Bluetooth Low Energy, BLE, signal, a Near-Field communication, NFC, signal, a Radio Frequency, RF, signal, an optical signal, a sound signal, vibration and a scheduled triggering.

There may be a plurality of electronic labels 320 present. Hence, at least one electronic label 320 may be present. The at least one electronic label 320 may comprise an optical output device 340. The optical output device 340 may comprise at least one of a LED, a display and any other visual device. The at least one electronic label 320 may comprise a receiver 325. The receiver 325 may be arranged to receive at least one of a Radio Frequency, RF, signal, a wireless, WIFI, signal, an Infrared, IR, signal, a Bluetooth, BT, signal, a Near-Field communication, NFC, signal, a Radio Frequency identification, RFID, signal, an optical signal, a sound signal or any signal suitable for communication. The electronic label may also comprise a transmitter. The electronic label may comprise a transceiver arranged for both transmitting and receiving a signal. The transceiver may be arranged to receive the control signal. The transceiver and/or the transmitter may be arranged to transmit a signal. The signal transmitted by the transceiver and/or the transmitter may be transmitted by the transceiver and/or transmitter upon request.

The camera 310 may be configured to transmit a control signal 380,381 that may further comprise information associated with a request of data transfer from the electronic label 320 to the camera 310. In other words, the camera 310 may be configured to request and/or ask for data from the electronic label 320. Wherein the data may be associated with the electronic label 320 and/or information associated with a product type. The data may comprise at least one of battery level, information currently presented by the electronic label, general status of the electronic label and an identifier of the electronic label. Wherein the general status of the electronic label may in turn comprise possible errors in circuitry, errors in power supply and/or other errors significant for the performance of the electronic label 320.

The electronic label 320 may comprise a sensor. The sensor may comprise at least one of a temperature sensor, a motion sensor and accelerometer sensor. The electronic label 320 may comprise a storage device. As discussed, the camera may be configured to transmit a control signal, and the control signal may further comprise information associated with a request of data transfer from the electronic label to the camera. The electronic label 320 may further be configured to transmit the data that may comprise at least one of detected temperature, detected motion, detected acceleration of the electronic label, historical temperature data, historical detected motion data and historical detected acceleration of the electronic label.

The camera 310 may be configured to be working in a low power mode and a normal power mode. Wherein the low power mode is a mode consuming less power than the normal power mode by for example using less features of the camera. As a non-limiting example, the camera may cease capturing of images in the lower power mode or capture images with low capture frequency. The camera 310 may be configured to be working in the low power mode until at least one of the camera 310 and the electronic label 320 detects at least one of a motion, a vibration, the control signal, the triggering signal, a sound signal and a scheduled triggering. When at least one of the camera 310 and the electronic label 320 detects at least one of a motion, a vibration, the control signal, the triggering signal, a sound signal and a scheduled triggering, the camera may be configured to change into the normal power mode, wherein the normal power mode it may be meant that the camera start capturing images and/or captures images more frequent compared to the low power mode.

The system 300 may further comprise a control unit 330. The control unit 330 may be adapted to communicate with the camera 310 and configured to detect an identifier of the electronic label 320 by analyzing the optical output in the image and configured to determine a position of the electronic label 320 based on the position of the electronic label 320 in the image.

The control unit 330 may be arranged separately from the camera 310 or arranged within the camera 310. In other words, the camera 310 may comprise the control unit 330.

The control unit 330 may communicate with the camera by at least one of Radio Frequency, RF, signal, a wireless, WIFI, signal, an Infrared, IR, signal, a Bluetooth, BT, signal, a Near-Field communication, NFC, signal, a Radio Frequency identification, RFID, signal, an optical signal, a sound signal or any signal suitable for communication. The control unit 330 may comprise a transceiver 335. The control unit 330 may, by the transceiver 335, send a control signal 380, 381 arranged to be received by at least one of the server 350, the camera 310 and the electronic label 320, wherein the control signal 380, 381 may control at least one of the camera 310, the server 350 and the electronic label 320.

The system may further comprise a server 350 and a storage means 360. The server 350 may be communicatively connected to the storage means 360. The server 350 may further comprise a transceiver 355. The server 350 may, by the transceiver 355, send a control signal 380,381 arranged to be received by at least one of the camera 310, the control unit 330 and the electronic label 320, wherein the control signal 380, 381 may control at least one of the camera 310, the server 350 and the electronic label 320.

At least one of the camera 310, the server 350 and the control unit 330 may comprise information of the camera 310 and its associated electronic labels 320. By the camera 310 and its associated electronic labels it may be meant that the field of view of the camera 310 comprises electronic labels. In other words, electronic labels associated with the camera 310 may be comprised within the field of view of the camera 310.

The camera 310 may, by the transceiver 315, transmit a signal arranged to be received by the at least one of the control unit 330, the electronic label 320 and the server 350. The signal transmitted from the camera 310 may comprise at least one of a control signal, an image, a determined position, a determined identifier or any data relating to the electronic labels. The transceiver 315 may have a limited range and the at least one electronic label 320 arranged within the limited range may receive the control signal. Electronic labels being out of range may not receive the control signal and hence, may not change its optical output.

The camera 310 may transmit a control signal 380 directly to be received by the electronic label 320 and/or the camera 310 may transmit a control signal 380, 381 to be received by the electronic label 320 via at least one of the server 350 and the control unit 330.

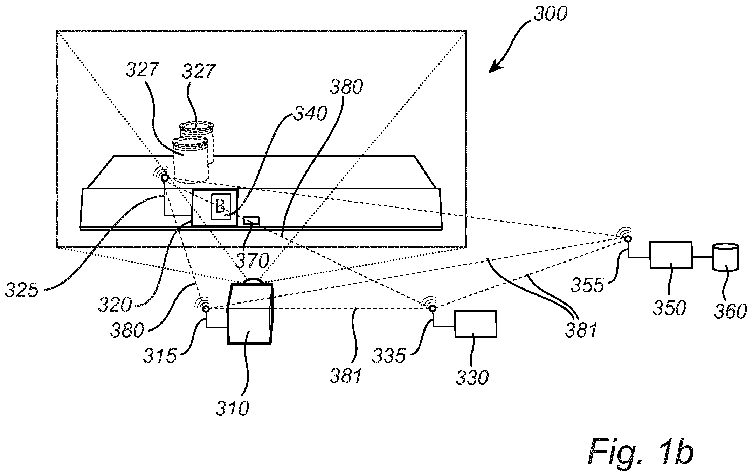

As seen in figure 1a - 1b, the electronic label 320 may change its optical output. The electronic label in Figure 1a may receive the control signal 380,381 and based on that the identifier comprised in the control signal matches an identifier of the electronic label 320 the optical output of the electronic label may change. The change in optical output may be a predetermined change in optical output and/or a change in optical output based on the control signal 380,381, wherein the control signal 380,381 may comprise information on how to change the optical output. In Figure 1a and 1b this is illustrated as the electronic label changing the optical output based on that the identifier comprised in the control signal 380,381 matches an identifier of the electronic label 320

The change in optical oputput may be initiated by the electronic label receiving the control signal 380. As prevuiously disussed, the control signal 380 may be transmitted from the camera 310 as a response to the camera 310 recieing at least one of the control signal and the triggering signal. The control signal may comprise the triggering signal. At least one of the control signal and the triggering signal may be generated by at least one of a motion detected by the camera, a button pressed on the camera, a Wireless, Wifi, signal, an Infrared, IR, signal, a Bluetooth Low Energy, BLE, signal, a Near-Field communication, NFC, signal, a Radio Frequency, RF, signal, an optical signal, a sound signal, vibration and a scheduled triggering.

The camera may comprise sensor for detecting at least one of motion, sound and vibration, in other words, the camera may comprise at least one of a motion sensor, a sound sensor, a vibration sensor. The motion sensor may be an infrared sensor. The sound sensor and/or the vibration sensor may comprise at least one of a microphone, an accelerometer, or any other device suitable to detect sound and/or vibration. The motion sensor may be a passive infrared sensor (PIR sensor).

By a motion detected by the camera it may be meant that movement may be detected by detecting changes in images and/or that motion may be detected by the motion sensor. In other words, the control signal and/or the triggering signal may be generated as a response to motion detected by the camera by analyzing images and/or as a response to the motion sensor detecting motion. This may be indicative of someone moving in the field of view of the camera and/or in the field of view of the motion sensor.

The control signal and/or triggering signal transmitted as response to the motion, vibration and/or sound detected by the camera may be received by the electronic label. The electronic label may be controlled to change its optical output in response to the received control signal and/or triggering signal, wherein the change in optical output may be at least one of change in information presented by a display device and a flashing light from the light source, wherein the light source may be as earlier explained a light emitting device, LED, a display device and/or any other device suitable to produce a visual output. The electronic label may be controlled to produce sound in response to the received control signal and/or triggering signal.

The change in optical output of the at least one electronic label 320 may comprise displaying a visual reference, such as at least one of a barcode, a QRcode, a number, a letter and the combination thereof. The change in optical output may comprise changing the color output of the electronic label 320.

The camera 310 may be comprised in a mobile device. By a mobile device may here be meant a device being mobile and could comprise at least one of a movable robot, a drone, part of a robot such as a moving arm of a stationary or movable robot, cellular device, smart phone, pad, tablet, computer, portable computer and any device suitable to carry a camera and being mobile and/or movable. The drone may be a flying drone configured to be autonomously controlled and/or user controlled.

In the system 300 illustrated in Figure 1a, at least one of the camera 310, the server 350 and the control unit 330 may transmit a control signal 380, 381. At least one of the camera 310, the server 350 and the control unit 330 may broadcast the control signal 380, 381. The control signal 380, 381 may subsequently be received by the electronic label 320. The control signal 380,381 that may be transmitted from anyone of the server 350 and the control unit 330 may be received by the camera 310. The camera 310 may in turn transmit the control signal 380. The control signal 380 may be received by the receiver 325.

Figure 1b illustrates a change in optical output of the electronic label 320. The electronic label 320 may be controlled to change its optical output based on the control signal 380. The change in optical output may be achieved by the optical output device 340 changing its optical output. The control signal 380, 381 may comprise information, wherein at least part of the information may be associated with a change in optical output of the electronic label 320 and wherein the change in optical output by the electronic label 320 may be based on the information.

The information may comprise at least one of a product name, a price information, information for staff, information to alert staff, inventory information, information to alternate light output, information to change color, information to display an image. In other words, the electronic label may be configured to change its optical output wherein the change in optical output may comprise at least one of a product name, a price information, information for staff, information to alert staff, inventory information, alternating light output, color change, display of an image.

The camera 310 may be configured to capture at least one image in order to verify the change in optical output. By comparing the optical output in the captured at least one image to a predetermined data the optical output may be verified. The predetermined data may comprise at least one of an image and information of expected image data. Wherein information of expected image data may comprise a color, a hash code, a QR code or any information suitable to verify the contents of the captured at least one image.

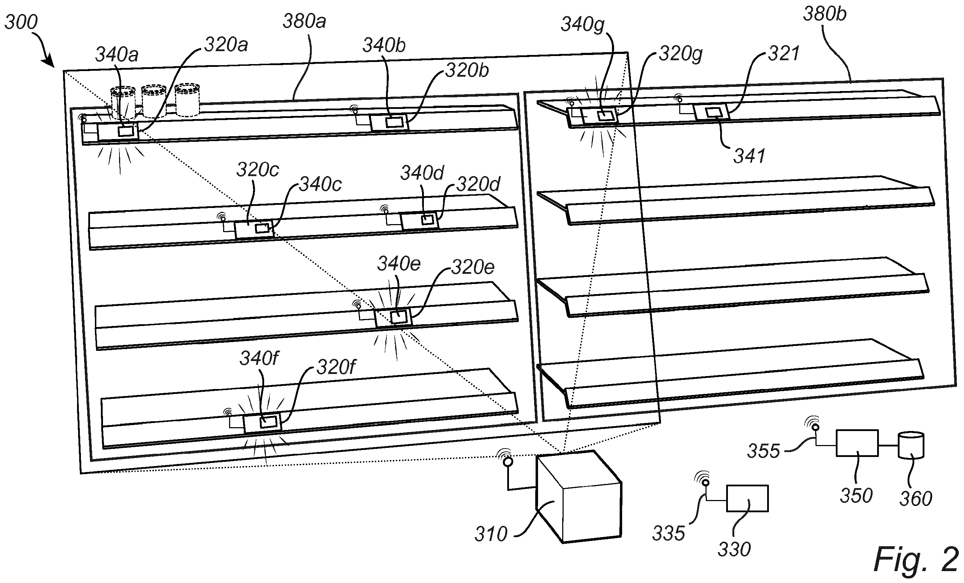

Figure 2 schematically illustrates the system 300 similar to that of the system 300 in Figure 1 a - 1 b, except that in Figure 2 a plurality of electronic labels 320a - 320g are arranged within the field of view of the camera 310. Same features discussed to the electronic label 320 in Figure 1a - 1b applies to the plurality of electronic labels 320a - 320g in Figure 2. The control unit 330 and the server 350 illustrated in Figure 2 has the similar functionality as the control unit 330 and server 350 in Figure 1 a - 1b.

The electronic labels 320a - 320g in Figure 2 are positioned in shelfs 385a, 385b. The electronic labels may be arranged in any type of fixture for holding products such as shelves, racks or other displays. Figure 2 further illustrates at least one electronic label 321 arranged outside the field of view of the camera 310. The electronic labels 320a - 320g may be have their optical output changed. The electronic labels 320a - 320g in Figure 2 may have received the control signal prior changing their optical output. The control signal 380 may have been transmitted, as previously disclosed to Figures 1a - 1b, from either the camera 310, the server 350 or the control unit 330. The control signal 381 transmitted from at least one of the server 350 and the control unit 330 may be received by the camera 310 and the camera 310 may transmit the control signal 380 upon reception of said control signal 381. The control signal 380 may be received by at least one of the electronic labels 320a - 320g.

The optical output of each electronic label 320a - 320g may be changed by changing the optical output of the respective optical output device 340a -340g.

As previously discussed, the camera 310 may be configured to determine the identifier of the electronic label 320 and/or the camera may be configured to receive the identifier from the server 350, i.e. the server 350 may transmit the identifier of at least one of the electronic labels 320a - 320g. The server 350 may comprise information of the electronic labels 320a - 320g arranged in the field of view of the camera 310. The system 300 may comprise at least one camera 310. Hence, the server 350 may further facilitate coordination of the at least one camera 310 and the change in optical output and/or update of the plurality of electronic labels 320a - 320g within the retail environment. In other words, this may further facilitate updating the electronic label coordinating the at least one camera 310.

Additionally, the camera 310 may determine the position of at least one of the electronic labels 320a - 320g. The camera 310 may also be configured to receive the position of each electronic label 320a - 320g from the server 350, i.e. the server 350 may transmit the position of at least one of the electronic labels 320a - 320g. The camera 310 may be configured to verify the optical output of at least one of the electronic labels 320a - 320g. The camera 310 may be configured to transmit the captured at least one image. At least one of the server 350 and the control unit 330 may be arranged to receive the at least one image. At least one of the camera 310, the server 350 and the control unit 330 may have at least one of the position and identity of the electronic labels 320a - 320g, wherein the electronic labels 320a - 320g are arranged in the field of view of the camera 310. Analogously, the system 300 may comprise more than one camera 310, each camera 310 being associated with at least one electronic label 320a - 320g. By being associated with at least one electronic label 320a - 320g it may be meant that the at least one electronic label 320a - 320g may be arranged in the field of view of the camera 310. Hence, at least one of the server 350, the control unit 330 and the camera 310 may be configured to verify the optical output of at least one electronic label 320a - 320g.

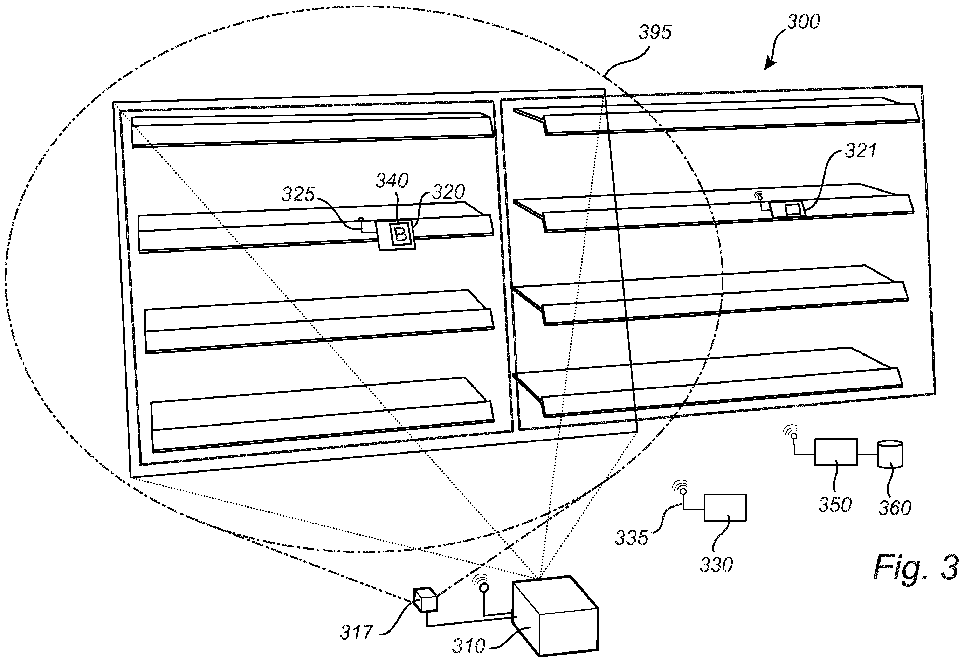

The system 300 according to another embodiment will be described with reference to Figure 3. The system 300 may be similarly configured as the system 300 described with reference to Figure 2, but Figure 3 is relating to how the control signal 380 may be directed to the at least one electronic label 320.

Figure 3 schematically illustrates a perspective view of the system 300 according to an embodiment. Figure 3 illustrates a camera 310 and an electronic label 320 arranged within the field of view of the camera 310. The transceiver 315 may comprise an optical transmitter 317, the optical transmitter may comprise a LED, the LED may be arranged to emit at least one of visible light, UV-light or IR-light.

The camera 310 may transmit the control signal using at least one of the transceiver 315 and the optical transmitter 317. As previously discussed, the transceiver 315 may have a limited range and only the at least one electronic label 320 arranged within the limited range may receive the control signal. Electronic labels being out of range may not receive the control signal and hence, may not have its optical output changed.

Analogously, the optical transmitter 317 may have a limited range. The control signal transmitted from the optical transmitter 317 may be directed. By directed may it may be meant that the control signal may have a direction. The control signal 380 may be aimed toward the electronic label 320 such the control signal 380 reaches an area 395 comprising the electronic label 320, wherein the area 395 may be a projected area of the control signal 380 in a plane comprising at least one electronic label 320. This may further facilitate limiting the electronic labels 320 to be controlled to have their optical output changed. In other words, the optical transmitter 317 may be directed to the area 395, wherein electronic labels 320 within the area 395 may be controlled to have their optical output changed. More specifically, the optical transmitter 317 may be pointing in a direction creating a cone of illuminance transmitted from the optical transmitter, wherein electronic labels 320 arranged within that cone of illuminance may be controlled to have their optical output changed.

This is illustrated in Figure 3, the optical transmitter 317 is transmitting an optical signal, wherein the optical signal may comprise the control signal 380. The optical signal may comprise electromagnetic radiation in wavelengths corresponding to wavelengths for at least one of UV, visible or IR radiation. The optical signal may have a limited range in the direction of the light propagation. The optical signal may have a limited area and/or volume being illuminated, as previously described. This may result in a projected area of illuminance in a plane comprising the at least one electronic label 320. In Figure 3 this plane may be the shelf and/or shelves comprising the at least one electronic label 320. Objects arranged outside this projected area of illuminance, such as the electronic label 321 will not receive the transmitted optical signal. Hence, the electronic label 321 will not be controlled to have its optical output changed. The optical transmitter 317 may be configured so that the electronic labels 320 within the field of view of the camera 310 is being illuminated by the optical transmitter 317. The optical transmitter 317 and the camera 310 may be arranged so that the camera 310 captures at least one image of a portion of the at least one electronic label 320 illuminated by the optical transmitter. This is schematically illustrated in Figure 3, as the cone of illuminance form the optical transmitter is larger than the area imaged by the camera 310 in a plane comprising the electronic labels 320.

The cone of illuminance from the optical transmitter may further facilitate directing the control signal and hence this may further facilitate limiting the number of electronic labels receiving the control signal. In turn, this may further facilitate saving power while positioning and identifying the electronic labels.

The optical transmitter 317 in Figure 3 is arranged on the camera 310. However, the optical transmitter 317 is not limited to be arranged on the camera 310, but can also be arranged as a separate unit next to the camera 310 or on anyone of the server 350 and the control unit 330 and may be controlled by the camera through a control signal 381. The camera 310 may transmit a control signal 380 directly to be received by the electronic label 320 and/or the camera 310 may transmit a control signal 380, 381 to the electronic label 320 via at least one of the server 350 and the control unit 330.

As illustrated in Figure 3, the optical transmitter transmits a signal, wherein the signal comprises the control signal. However, the idea of limiting the number of electronic labels 320 to be controlled to have their optical output changed as illustrated in Figure 3, is not limited to an optical signal. The signal that may comprise the control signal could be any signal with limitation in range and/or direction know in the art of communication.

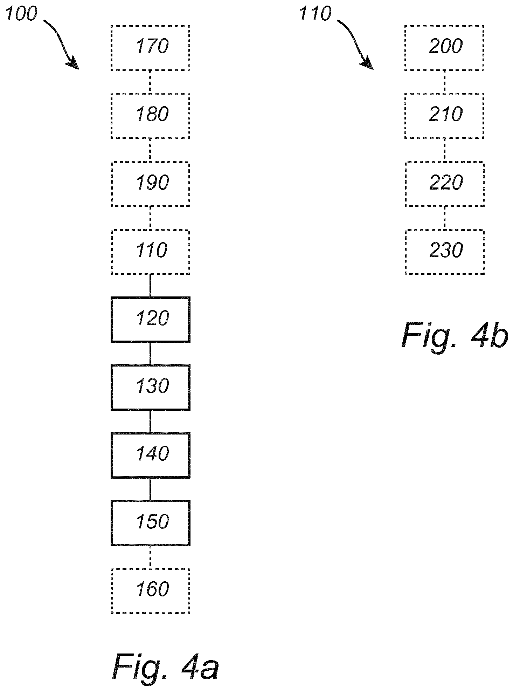

A method 100 for controlling an optical output of at least one electronic label in a retail environment according to an embodiment will now be described with reference to Figure 4. For clarity and simplicity, the method will be described in terms of 'steps'. It is emphasized that steps are not necessarily processes that are delimited in time or separate from each other, and more than one 'step' may be performed at the same time in a parallel fashion.

The method 100 for controlling an optical output of at least one electronic label in a retail environment is provided, wherein the electronic label may comprise a receiver for receiving a control signal and may be adapted to change its optical output in response to the control signal, the electronic label may be arranged within the field of view of a camera comprising a transmitter for transmitting a control signal.

The method may comprise the steps of receiving 120, by the camera, an identifier of the electronic label and transmitting 130, by the camera, a control signal comprising the identifier. The method may further comprise receiving 140, by the electronic label, the control signal comprising the identifier and changing 150 the optical output of the electronic label based on that the identifier comprised in the control signal matches an identifier of the electronic label.

By changing 150 the optical output it may be meant that a visual output of the electronic label is changed, such as a change in output of light intensity from the electronic label, change in color output from the electronic label and/or change in displayed information on the electronic label.

Hence, the electronic label comprising the identifier matching the identifier of the one in the control signal may change its optical output. In other words, electronic labels comprising the identifier not matching the identifier of the one in the control signal may not change its optical output.

The step of transmitting 130 by the camera, a control signal comprising the identifier may comprise at least one of transmitting and broadcasting by the camera a control signal comprising the identifier to electronic labels within the field of view of the camera.

By broadcasting may be meant that the camera may transmit the control signal without prior knowledge of at least one of the identity and the position of the at least one electronic label.

The method may also comprise determining 110 an identifier of the electronic label using the camera.

By using the camera, it is meant that the camera is used to receive the identifier. This may be done by capturing at least one image comprising the electronic label using the camera. The at least one image may be analyzed to determine the identifier of the electronic label from the image. I.e. the optical output may be analyzed in the at least one image. By the optical output may be analyzing in the at least one image it may be meant that the at least one image may be analyzed for changes in optical output from the electronic label. The identifier may be determined by a characteristic change in optical output from the electronic label, wherein the characteristic change in optical output is associated with the identifier of the electronic label and hence the change in optical output may be significant for a specific electronic label. In other words, the image may be analyzed for detecting the change or changes in optical output in order to detect the identifier of each of the at least one electronic label. The change in optical output it may be meant that a visual output is changed, such as a change in output of light intensity from the electronic label, change in color output from the electronic label and/or change in displayed information on the electronic label.

Hence, the step of determining 110 an identifier of the electronic label may comprise transmitting 200 a control signal from the camera to the electronic label and controlling 210 the electronic label to change its optical output based on the control signal. The step of determining 110 may further comprise capturing 220 a plurality of images containing the electronic label and determining 230 an identifier of the electronic label by analyzing the optical changes in the images.

The change in optical output may comprise a distinct pattern of optical changes.
wherein the control signal further comprises information associated with a change in optical output of the electronic label and wherein the change in optical output by the electronic label is based on the information. Wherein the information may comprise at least one of a product name, a price information, information for staff, information to alert staff, inventory information, information to alternate light output, information to change color, information to display an image.

The method may further comprise verifying 160 the change in optical output using the camera.

By verifying the change in optical output using the camera it may be meant that the camera may capture at least one image and by analyzing the at least one image the optical output may be verified by comparing the optical output to a predetermined optical output. In other words, an image may be captured and the captured image may be compared to expected image data or similar data associated with an expected change of optical output. By data associated with an expected change of optical output it may be meant that the data comprises information on expected change of optical output from the electronic label. The optical output may comprise a text, a hash code, an QR code and/or an image and hence verifying the change in optical output may comprise analyzing the text, the hash code, the QR code and/or the image of the electronic label in the captured image. The electronic label may change its optical output in a predetermined way verifying that the optical output of the electronic label is changed based on the received control signal. The optical output may comprise a change of light intensity and/or color and the verifying the change in optical output may comprise analyzing the change of light intensity and/or color of the optical output of the electronic label in the captured image. The change in light intensity and/or color may comprise a distinct temporal pattern of optical changes. In other words, the change of light intensity and/or color of the electronic label may comprise a characteristic change of optical output significant for a specific electronic label.

The method may also comprise the steps of receiving 170, by the camera, a triggering signal and triggering 180 the camera to start determining an identifier of the electronic label based on the triggering signal.

The control signal may be transmitted to electronic labels arranged in the field of view of the camera. In other words, the control signal may be transmitted such that electronic labels arranged in the field of view of the camera may receive the control signal. In other words, the control signal may be transmitted and electronic labels arranged in the field of view of the camera may receive the control signal. Even though, the electronic labels arranged in the field of view of the camera may be the main target for the control signal, electronic labels arranged outside the field of view of the camera may also receive the control signal. Hence, the control signal may be transmitted so that electronic labels arranged outside the field of view of the camera may receive the control signal.
As previously discussed the control signal may comprise the identifier of the electronic label arranged in the field of view of the camera, in this way electronic labels arranges outside the field of view may not be triggered to change its optical output even though they may receive the control signal. In other words, electronic labels arranged outside the field of view may not change its optical output as a response to receiving the control signal. This may provide for facilitated control of optical output of the electronic labels. The camera may receive the identifier from a server. The identifier may comprise a predetermined unique identifier and/or a shortened unique identifier.

To limit the number of electronic labels reached by the control signal the control signal may have a limited range and/or direction. The range may be a predetermined range such that the electronic label arranged in the field of view of the camera is reached.

The control signal may be transmitted in a direction, and wherein the control signal is transmitted using at least one of a Wireless, Wifi, signal, an Infrared, IR, signal, a Bluetooth Low Energy, BLE, signal, a Near-Field communication, NFC, signal, a Radio Frequency, RF, signal, an optical signal and a sound signal.

The control signal may comprise information associated with a change in optical output of the electronic label and wherein the change in optical output by the electronic label may be based on the information.

The information may comprise at least one of a product name, a price information, information for staff, information to alert staff, inventory information, information to alternate light output, information to change color, information to display an image.

The control signal may comprise information associated with a request of data transfer from the electronic label to the camera. Hence, data may be transferred from the electronic label to the camera upon request. The data may comprise at least one of battery level, information currently presented by the electronic label, general status of the electronic label, an identifier of the electronic label, temperature data, accelerometer data, motion detection data, historical temperature data, historical motion detection data and historical accelerometer data. Wherein the general status of the electronic label may in turn comprise possible errors in circuitry, errors in power supply and/or other errors significant for the performance of the electronic label.

The method may further comprise triggering 190 the camera to start transmitting the control signal, wherein the triggering signal may be generated by at least one of a motion detected by the camera, a button pressed on the camera, a Wireless, Wifi, signal, an Infrared, IR, signal, a Bluetooth Low Energy, BLE, signal, a Near-Field communication, NFC, signal, a Radio Frequency, RF, signal, an optical signal, a sound signal, vibration and a scheduled triggering.

A user, such as staff, may manually update information presented on the electronic label by pressing a button on the camera. The information may also be updated by pressing a button on the electronic label. The information may be retrieved by the electronic label from the server upon request. The electronic label may transmit at least one of a control signal and a triggering signal to the camera as a response of the user pressing the button on the electronic label. The user may also use a mobile device to transmit the triggering signal to the camera in order to trigger the camera start transmitting the control signal. By a mobile device it may be meant a movable device. By a mobile device it may be meant a portable device. By a mobile device it may here be meant a device being mobile and/or movable and could comprise at least one of a movable robot, part of a robot such as a moving arm of a stationary or movable robot, a drone, cellular device, smart phone, pad, tablet, computer, portable computer and any device suitable to transmit a triggering signal and being mobile and/or movable. The drone may be a flying drone configured to be autonomously controlled and/or user controlled.

The triggering signal may be generated internally within the camera or externally and transmitted to the camera.

By the triggering signal being generated by motion detected by the camera it may be meant that the triggering signal is being generated as a response to the camera detecting motion. In other words, the camera may detect motion within the field of view of the camera. The camera may comprise a motion sensor, and by the triggering signal being generated by motion detected by the camera it may be meant that the triggering signal is being generated as a response to the motion sensor detecting motion. This may be indicative of someone moving in the field of view of the camera and/or in the field of view of the motion sensor. The motion sensor may be an infrared sensor. The motion sensor may be a passive infrared sensor (PIR sensor). The control signal may then be sent to the electronic label to change its optical output.

By the triggering signal being generated by at least one of a Wireless, Wifi, signal, an Infrared, IR, signal, a Bluetooth Low Energy, BLE, signal, a Near-Field communication, NFC, signal, a Radio Frequency, RF, signal, an optical signal and a sound signal it may be meant that the camera may receive the at least one of a Wireless, Wifi, signal, an Infrared, IR, signal, a Bluetooth Low Energy, BLE, signal, a Near-Field communication, NFC, signal, a Radio Frequency, RF, signal, an optical signal and a sound signal and the camera may be triggered to transmit the control signal as a response to the received signal.

The person skilled in the art realizes that the present invention by no means is limited to the embodiments described above. On the contrary, many modifications and variations are possible within the scope of the appended claims. For example, features from the embodiments described with reference to Figures 1, 2 and 3 may be combined. For example, there could be one or a plurality of electronic labels present. Even though the inventive concept is directed to control of the optical output of electronic labels being arranged within the field of view of the camera, the transmitted control signal may reach electronic labels arranged outside the field of view of the camera.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method (100) for controlling an optical output of at least one electronic label in a retail environment, wherein the electronic label comprises a receiver for receiving a control signal and is adapted to change its optical output in response to the control signal, the electronic label is arranged within the field of view of a camera comprising a transmitter for transmitting a control signal, the method comprising:
receiving (120), by the camera, an identifier of the electronic label;
transmitting (130), by the camera, a control signal comprising the identifier;
receiving (140), by the electronic label, the control signal comprising the identifier;
changing (150) the optical output of the electronic label based on that the identifier comprised in the control signal matches an identifier of the electronic label.

2. The method according to claim 1,
wherein receiving (120), by the camera, an identifier of the electronic label comprises at least one of determining (110) an identifier of the electronic label using the camera and receiving, by the camera, the identifier from a server.

3. The method according to any one of the preceding claims, wherein the control signal is transmitted to electronic labels arranged in the field of view of the camera.

4. The method according to any one of the preceding claims, wherein the control signal is transmitted in a direction, and wherein the control signal is transmitted using at least one of a Wireless, Wifi, signal, an Infrared, IR, signal, a Bluetooth Low Energy, BLE, signal, a Near-Field communication, NFC, signal, a Radio Frequency, RF, signal, an optical signal and a sound signal.

5. The method according to any one of claim 1 and 2, wherein the method further comprises:
verifying (160) the change in optical output using the camera.

6. The method according to any one of the preceding claims, wherein the identifier comprises a predetermined unique identifier.

7. The method according to any one of the preceding claims, wherein the identifier comprises a shortened unique identifier.

8. The method according to any one of the preceding claims, wherein the control signal further comprises information associated with a change in optical output of the electronic label and wherein the change in optical output by the electronic label is based on the information.

9. The method according to claim 8, wherein the information comprises at least one of a product name, a price information, information for staff, information to alert staff, inventory information, information to alternate light output, information to change color, information to display an image.

10. The method according to any one of the preceding claims, wherein the control signal further comprises information associated with a request of data transfer from the electronic label to the camera.

11. The method according to any one of the preceding claims, wherein the method further comprises:
receiving (170), by the camera, a triggering signal;
triggering (180) the camera to start determining an identifier of the electronic label based on the triggering signal.

12. The method according to any one of the preceding claims, wherein the method further comprises:
triggering (190) the camera to start transmitting the control signal;
wherein the triggering signal is generated by at least one of a motion detected by the camera, a button pressed on the camera, a Wireless, Wifi, signal, an Infrared, IR, signal, a Bluetooth Low Energy, BLE, signal, a Near-Field communication, NFC, signal, a Radio Frequency, RF, signal, an optical signal, a sound signal, vibration and a scheduled triggering.

13. The method according to any one the preceding claims, wherein determining (110) an identifier of the electronic label comprises:
transmitting (200) a control signal from the camera to the electronic label;
controlling (210) the electronic label to change its optical output based on the control signal;
capturing (220) a plurality of images containing the electronic label;
determining (230) an identifier of the electronic label by analyzing the optical changes in the images.

14. A system (300) for controlling an optical output of at least one electronic label in a retail environment, wherein the system comprises;
a camera (310) comprising a transmitter for transmitting a control signal;
an electronic label (320) comprising a receiver (325) for receiving the control signal (380, 381) and wherein the electronic label is adapted to change its optical output in response to the control signal, the electronic label is arranged within the field of view of the camera;
wherein the camera is adapted to receive an identifier of the electronic label and transmit a control signal comprising the identifier and wherein the electronic label is adapted to receive the control signal comprising the identifier and change its optical output based on that the identifier comprised in the control signal matches an identifier of the electronic label.
